# EUROPÄISCHE PATENTANMELDUNG

(11) **EP 0 666 640 A1**
(43) Veröffentlichungstag der Anmeldung: **09.08.1995**
(21) Anmeldenummer: 95100989.3
(22) Anmeldetag: 25.01.1995
(51) Int. Cl.: H02P 3/00

(54) **Einspeiseschaltung für eine Gleichstromlokomotive**

(30) Priorität: 07.02.1994 DE 4403761
(71) Anmelder: SIEMENS AKTIENGESELLSCHAFT, 80333 München (DE)
(72) Erfinder: Benker, Hans, Dipl.-Ing., D-90482 Nürnberg (DE); Fuchs, Andreas, Dr., D-91056 Erlangen (DE); Härer, Andreas, Dipl.-Ing., D-91080 Uttenreuth (DE)

(57) **Zusammenfassung**

Gemäß einer ersten Lösung sind jeweils zwei Umrichter einer Umrichtergruppe über Induktivitäten miteinander verbunden, wobei im Fall einer Störung der gestörte Umrichter abtrennbar und der funktionsfähige Umrichter einem anderen Umrichter parallel schaltbar ist. Gemäß einer zweiten Lösung sind die ersten Umrichter aller Umrichtergruppen jeweils den zweiten Umrichtern aller Umrichtergruppen zugeordnet, wobei im Fall einer Störung der gestörte Umrichter abtrennbar ist.

## Beschreibung

Die Erfindung betrifft eine Einspeiseschaltung für eine Gleichstromlokomotive.

Aufgabe der vorliegenden Erfindung ist es, eine Einspeiseschaltung für eine Gleichstromlokomotive zu schaffen, bei der bei Ausfall einer beliebigen Schaltungskomponente alle weiteren Antriebsachsen mit Ausnahme der betroffenen Antriebsachse betriebsfähig bleiben.

Die Aufgabe wird erfindungsgemäß durch die im Anspruch 1 bzw. im Anspruch 2 angegebenen Merkmale gelöst. Vorteilhafte Ausgestaltungen der Erfindung sind jeweils Gegenstand der weiteren Ansprüche.

Bei der erfindungsgemäßen Einspeiseschaltung nach Anspruch 1 oder nach Anspruch 2 ist sichergestellt, daß bei Ausfall einer beliebigen Schaltungskomponente mit Ausnahme der betroffenen Antriebsachse alle weiteren Antriebsachsen betriebsfähig bleiben.

Erfindungsgemäß wird dies dadurch erreicht, daß sowohl bei der Einspeiseschaltung nach Anspruch 1 als auch bei der Einspeiseschaltung nach Anspruch 2 jeweils ein erster und ein zweiter Umrichter zu einer Umrichtergruppe zusammengefaßt sind, wobei gemäß der Lösung nach Anspruch 1 in jeder Umrichtergruppe der erste Umrichter mit seiner negativen Zwischenkreisschiene über eine erste Induktivität am Eingangsstromrichter des zweiten Umrichters angeschlossen ist und der zweite Umrichter mit seiner positiven Zwischenkreisschiene über eine zweite Induktivität am Eingangsstromrichter des ersten Stromrichters angeschlossen ist. Bei einer in einem der Umrichtergruppen auftretenden Funktionsstörung wird der gestörte Umrichter vom funktionsfähigen Umrichter abgetrennt. Der funktionsfähige Umrichter wird zu einem Umrichter aus einer der anderen Umrichtergruppen mittels wenigstens eines Schalters, vorzugsweise mit Koppelschützen, parallel geschaltet.

Gemäß einer alternativen Lösung nach Anspruch 2 ist der erste Umrichter einer ersten Umrichtergruppe sowohl dem zweiten Umrichter der ersten Umrichtergruppe als auch dem zweiten Umrichter einer zweiten Umrichtergruppe zugeordnet. Weiterhin ist der erste Umrichter einer zweiten Umrichtergruppe sowohl dem zweiten Umrichter der zweiten Umrichtergruppe als auch dem zweiten Umrichter der ersten Umrichtergruppe zugeordnet. Ferner ist jeweils der erste Umrichter mit seiner negativen Zwischenkreisschiene über jeweils eine erste Induktivität am Eingangsstromrichter der zweiten Umrichter angeschlossen und jeweils der zweite Umrichter mit seiner positiven Zwischenkreisschiene über jeweils eine zweite Induktivität am Eingangsstromrichter der ersten Umrichter angeschlossen. Bei einer in einem der Umrichtergruppen auftretenden Funktionsstörung wird der gestörte Umrichter von den funktionsfähigen Umrichtern abgetrennt.

Bei der erfindungsgemäßen Einspeiseschaltung ist damit die größtmögliche Redundanz gegeben. Bei einer Lokomotive mit zwei Drehgestellen, von denen jedes zwei von einem Fahrmotor angetriebene Antriebsachsen aufweist, sind bei einem funktionsgestörten Umrichter immer noch drei Antriebsachsen betriebsfähig.

Bei der erfindungsgemäßen Lösung des Anspruchs 2 werden gegenüber der Lösung nach Anspruch 1 keine Koppelschütze benötigt, um den ungestörten Umrichter einem Umrichter aus einer der anderen Umrichtergruppen parallel zu schalten. Dies ist besonders vorteilhaft, da die Koppelschütze aufgrund der geforderten geringen Induktivität in diesem Kreis und der hohen Kapazität besonders problematisch sind.

Ist eine Rückspeisung in das Netz erwünscht, so kann die Einspeiseschaltung gemäß Anspruch 5 ausgeführt werden. Die steuerbaren Halbleiterelemente sind hierbei in vorteilhafter Weise als GTO-Thyristoren ausgebildet. Für bestimmte Anwendungsfälle können auch Transistoren, insbesondere IGBTs (Insulated Gate Bipolar Transistors) eingesetzt werden. Speziell bei IGBTs ist nur ein geringer Aufwand zur Ansteuerung erforderlich.

Werden jeweils zwei Gleichrichter-Dioden und die dazu anti-parallel geschalteten GTO-Thyristoren zu einem baugleichen Stromrichtermodul zusammengefaßt, dann können sowohl die Eingangsstromrichter als auch die Pulswechselrichter auf einfache Weise aus derartigen Stromrichtermodulen gebildet werden. Bei Verwendung von Stromrichtermodulen im Wechselrichter entspricht deren Anzahl der Phasenzahl des Motors.

Zur weiteren Erläuterung der Erfindung wird auf die Zeichnung bezug genommen, in der zwei Ausführungsbeispiele gemäß der Erfindung näher erläutert sind. Es zeigen:
- FIG 1 und 2: eine einpolige Darstellung der Einspeiseschaltung gemäß Anspruch 1,
- FIG 3 und 4: eine einpolige Darstellung der Einspeiseschaltung gemäß Anspruch 2,
- FIG 5: ein Prinzip-Schaltbild der erfindungsgemäßen Einspeiseschaltung nach Anspruch 2.

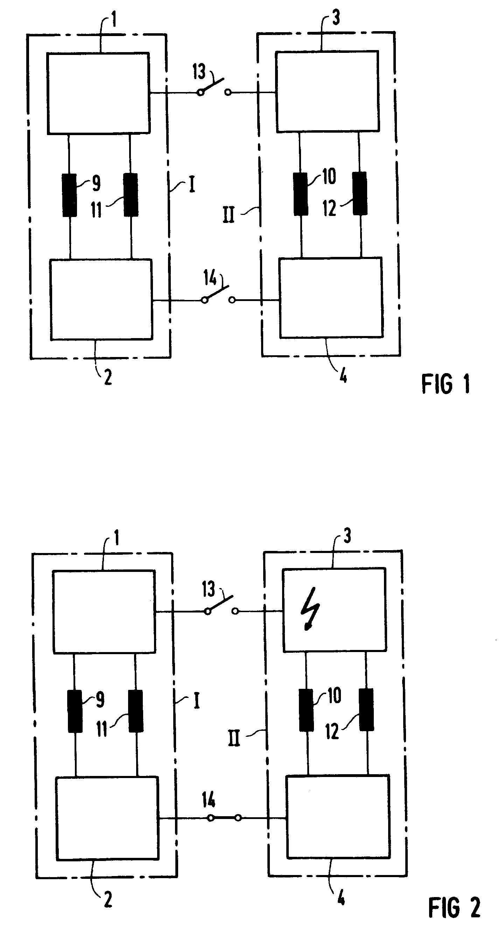

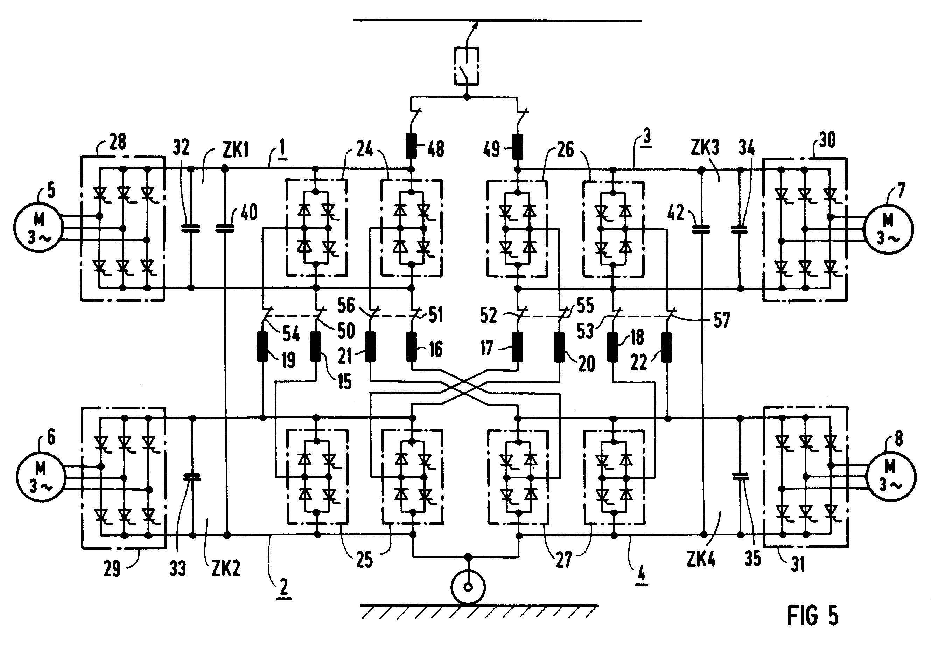

In den FIG 1 bis 4 sind mit I eine erste und mit II eine zweite Umrichtergruppe bezeichnet. Jede Umrichtergruppe I bzw. II umfaßt zwei Umrichter 1 und 2 bzw. 3 und 4. Die erste Umrichtergruppe I besteht aus den Umrichtern 1 und 2 wohingegen die zweite Umrichtergruppe II aus den Umrichtern 3 und 4 besteht. Die Umrichter 1 bis 4, die jeweils einen Eingangsstromrichter, einen Zwischenkreis und einen motorseitigen Stromrichter umfassen (FIG 5 und 6 ), speisen jeweils einen Fahrmotor 5 bis 8. Es wäre auch vorstellbar, daß ein Umrichter mehrere Fahrmotoren speist. Durch die Zuordnung jeweils eines Umrichters zu jedem Fahrmotor ergeben sich vier unabhängige Zwischenkreise.

Gemäß der Lösung nach Anspruch 1 nach FIG 1 und 2 ist in jeder Umrichtergruppe I, II der erste Umrichter 1 bzw. 3 mit seiner negativen Zwischenkreisschiene über eine erste Induktivität 9 bzw. 10 mit dem Eingangsstromrichter des zweiten Umrichters 2 bzw. 4 verbunden. Der zweite Umrichter 2 bzw. 4 der Umrichtergruppe I bzw. II ist mit seiner positiven Zwischenkreissschiene über eine zweite Induktivität 11 bzw. 12 am Eingangsstromrichter des ersten Umrichters 1 bzw. 3 angeschlossen.

Tritt nun in einer der beiden Umrichtergruppen I, II eine Funktionsstörung auf, so ist der gestörte Umrichter vom funktionsfähigen Umrichter abtrennbar, wobei der Zwischenkreis des funktionsfähigen Umrichters dem Zwischenkreis eines Umrichters aus einer der anderen Umrichtergruppen mittels wenigstens eines zweipoligen Schalters parallel schaltbar ist. In FIG 2 ist dies am Beispiel der Umrichter 3 und 4 der Umrichtergruppe II gezeigt.

Der erste Umrichter 3 ist gestört und wird mittels eines nicht dargestellten Schalters vom funktionsfähigen zweiten Umrichter 4 abgetrennt. Der funktionsfähige zweite Umrichter 4 wird durch Schließen eines zweipoligen Schalters 14 parallel zum zweiten Umrichter 2 der ersten Umrichtergruppe I geschaltet. Die zweiten Umrichter 2 und 4 sind damit gemeinsam in Reihe zum ersten Umrichter 1 der ersten Umrichtergruppe I geschaltet. Analog wird bei einem Ausfall des zweiten Umrichters 4 in der zweiten Umrichtergruppe II der noch funktionsfähige erste Umrichter 3 mittels eines zweipoligen Schalters 13 parallel an den funktionsfähigen Umrichter 1 der ersten Umrichtergruppe I geschaltet. Die ersten Umrichter 1 und 3 liegen nun gemeinsam in Reihe mit dem zweiten Umrichter 2 der ersten Umrichtergruppe I. Bei einem Ausfall eines Umrichters in der ersten Umrichtergruppe I wird ebenfalls durch Schließen des Schalters 13 bzw. 14 der funktionsfähige Umrichter der ersten Umrichtergruppe I an die funktionsfähigen Umrichter 3 und 4 der zweiten Umrichtergruppe II geschaltet. Damit ist eine 75prozentige Redundanz gewährleistet.

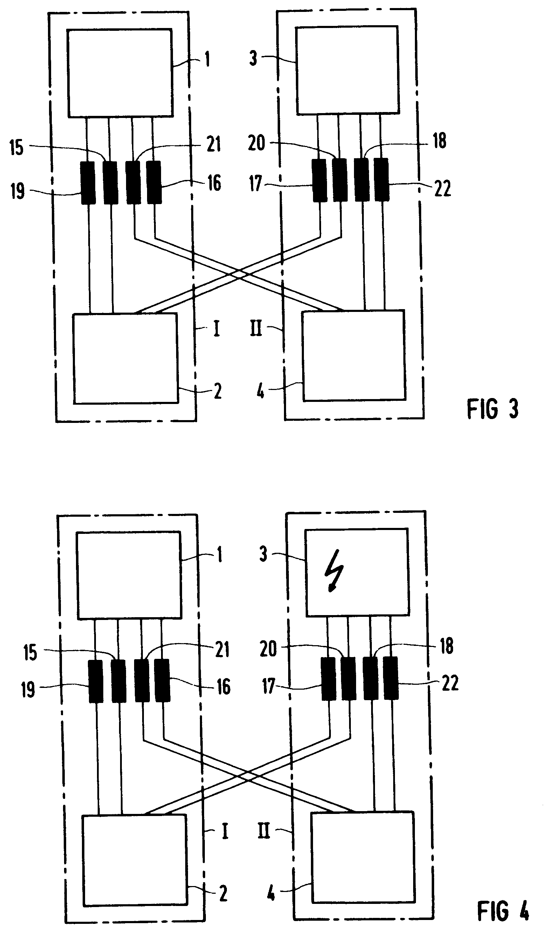

Nach der alternativen Lösung gemäß Anspruch 2 (FIG 3 und 4) ist der erste Umrichter 1 der ersten Umrichtergruppe I sowohl dem zweiten Umrichter 2 der ersten Umrichtergruppe I als auch dem zweiten Umrichter 4 der zweiten Umrichtergruppe II zugeordnet. Weiterhin ist der erste Umrichter 3 der zweiten Umrichtergruppe II sowohl dem zweiten Umrichter 4 der zweiten Umrichtergruppe II als auch dem zweiten Umrichter 2 der ersten Umrichtergruppe I zugeordnet.

Der erste Umrichter 1 der ersten Umrichtergruppe I ist mit seiner negativen Zwischenkreischiene über eine erste Induktivität 15 am Eingangsstromrichter des zweiten Umrichters 2 der ersten Umrichtergruppe I und über eine erste Induktivität 16 am Eingangsstromrichter des zweiten Umrichters 4 der zweiten Umrichtergruppe II angeschlossen. Analog ist der erste Umrichter 3 der zweiten Umrichtergruppe II mit seiner negativen Zwischenkreisschiene über eine erste Induktivität 17 am Eingangsstromrichter des zweiten Umrichters 2 der ersten Umrichtergruppe I und über eine erste Induktivität 18 am Eingangsstromrichter des zweiten Umrichters 4 der zweiten Umrichtergruppe II angeschlossen.

Weiterhin ist der zweite Umrichter 2 der ersten Umrichtergruppe I mit seiner positiven Zwischenkreisschiene über eine zweite Induktivität 19 am Eingangsstromrichter des ersten Umrichters 1 der ersten Umrichtergruppe I und über eine zweite Induktivität 20 am Eingangsstromrichter des ersten Umrichters 3 der zweiten Umrichtergruppe II eingeschlossen. In analoger Weise ist der zweite Umrichter 4 der zweiten Umrichtergruppe II mit seiner positiven Zwischenkreisschiene über eine zweite Induktivität 21 am Eingangsstromrichter des ersten Umrichters 1 der ersten Umrichtergruppe I und über eine zweite Induktivität 22 am Eingangsstromrichter des ersten Umrichters 3 der zweiten Umrichtergruppe II angeschlossen.

Bei einer in einem der Umrichtergruppen I oder II auftretenden Funktionsstörung ist der gestörte Umrichter von den funktionsfähigen Umrichtern abtrennbar. Die bei der Lösung gemäß Anspruch 1 (FIG 1 und 2) erforderlichen Schalter 13 und 14 (Koppelschütze) können bei der Lösung gemäß Anspruch 2 entfallen.

In FIG 5 ist mit 1 bis 4 jeweils ein Umrichter bezeichnet, der an jeweils einen Fahrmotor 5 bis 8 geschaltet ist. In jedem Umrichter 1 bis 4 ist jeweils ein Eingangsstromrichter 24 bis 27 angeordnet. Jeder der vier Umrichter 1 bis 4 weist ferner einen mit dem Fahrmotor 5,6,7 bzw. 8 verbundenen motorseitigen Stromrichter 28 bis 31 auf. Die motorseitigen Stromrichter 28 bis 31 sind als Pulswechselrichter ausgebildet. Die Pulswechselrichter 28 bis 31 bestehen aus einer der Phasenzahl des zugehörigen Fahrmotors 5 bis 8 entsprechenden Anzahl von steuerbaren Stromrichterzweigen. Die Eingangsstromrichter 24 bis 27 der Umrichter 1 bis 4 wirken als Gleichstromsteller. Die erste Umrichtergruppe I (Umrichter 1 und 2) und die zweite Umrichtergruppe II (Umrichter 3 und 4) sind jeweils über ein Netzfilter, bestehend aus einer Filterinduktivität 48 bzw. 49 und einer Eingangsfilterkapazität 40 bzw.42 an ein Gleichspannungsnetz schaltbar.

Der Umrichter 1 ist mit seiner negativen Zwischenkreisschiene über eine erste Induktivität 15 am Eingangsstromrichter 25 des Umrichters 2 und über eine erste Induktivität 16 am Eingangsstromrichter 27 des Umrichters 4 angeschlossen. Weiterhin ist der Umrichter 3 mit seiner negativen Zwischenkreisschiene über eine erste Induktivität 17 am Eingangsstromrichter 25 des Umrichters 2 und über eine erste Induktivität 18 am Eingangsstromrichter 27 des Umrichters 4 angeschlossen. Ferner ist der Umrichter 2 mit seiner positiven Zwischenkreisschiene über eine zweite Induktivität 19 am Eingangsstromrichter 24 des Umrichters 1 und über eine zweite Induktivität 20 am Eingangsstromrichter 26 des Umrichters 3 angeschlossen. In analoger Weise ist der Umrichter 4 mit seiner positiven Zwischenkreisschiene über eine zweite Induktivität 21 am Eingangsstromrichter 24 des Umrichters 1 und über eine zweite Induktivität 22 am Eingangsstromrichter 26 des Umrichters 3 angeschlossen.

Im ungestörten Betrieb sind die Pulswechselrichter 28 bis 31 parallel oder in Reihe geschaltet. Am Beispiel der Umrichter 1 und 2 soll dies kurz erläutert werden.

Die Gleichstromsteller 24 und 25 sind so geschaltet, daß sich der Eingangsstrom aufteilt. Er fließt einerseits über den Pulswechselrichter 28 und die Induktivität 15 und andererseits über die Induktivität 19 und den Pulswechselrichter 29. Die beiden Pulswechselrichter 28 und 29 sind also über die Induktivitäten 15 und 19 parallel an die Eingangsfilterkondensatoren 40 und 41 geschaltet.

Da die Eingangsspannung größer ist als die Zwischenkreisspannungen, steigt der Strom an und die stromführenden Halbleiter-Elemente (GTO's) der Gleichstromsteller 24 und 25 müssen ausgeschaltet werden. Der Strom in den Induktivitäten 15 und 19 fließt über die Freilaufdioden der Gleichstromsteller 24 und 25 weiter. Der Summenstrom fließt demzufolge über den Pulswechselrichter 28 und teilt sich auf die Induktivität 15 bzw. die Induktivität 19 auf und fließt schließlich gemeinsam wieder durch den Pulswechselrichter 29 zurück ins Netz. Die beiden Pulswechselrichter 28 und 29 sind also in Reihe geschaltet.

Bei Auftreten einer Funktionsstörung in einem der Umrichter 1 bis 4 ist der gestörte Umrichter von den funktionsfähigen Umrichtern abtrennbar. Im dargestellten Ausführungsbeispiel sind hierzu Koppelschütze 50 bis 57 in Reihe zu den Induktiviäten 15 bis 22 geschaltet.

Ist bei der Darstellung in FIG 5 z.B. der Umrichter 3 gestört, dann wird der Umrichter 3 durch Öffnen der Koppelschütze 52 und 55 sowie 53 und 57 von den Umrichtern 2 und 4 getrennt. Außerdem muß in der Regel noch die Filterinduktivität 49 vom Gleichspannungsnetz getrennt werden. Weitere Schaltmaßnahmen, um den ungestörten Betrieb der verbleibenden Umrichter 1, 2 und 4 zu gewährleisten, sind nicht nötig.

## Patentansprüche

1. Einspeiseschaltung für eine Gleichstromlokomotive mit wenigstens vier Fahrmotorgruppen, bestehend aus jeweils mindestens einem Fahrmotor (5-8), wobei die Einspeiseschaltung folgende Merkmale aufweist:
a) jeder Fahrmotorgruppe (5-8) ist ein Umrichter (1-4) zugeordnet, der jeweils mindestens einen Eingangsstromrichter, einen Zwischenkreis und mindestens einen motorseitigen Stromrichter umfaßt,
b) jeweils ein erster und ein zweiter Umrichter (1,2 bzw. 3,4) sind zu einer Umrichtergruppe (I,II) zusammengefaßt, wobei
b1) der erste Umrichter (1 bzw. 3) mit seiner negativen Zwischenkreisschiene über eine erste Induktivität (9 bzw. 10) am Eingangsstromrichter des zweiten Umrichters (2 bzw. 4) angeschlossen ist und
b2) der zweite Umrichter (2 bzw. 4) mit seiner positiven Zwischenkreisschiene über eine zweite Induktivität (11bzw. 12) am Eingangsstromrichter des ersten Umrichters (1 bzw. 3) angeschlossen ist und
b3) bei einer auftretenden Funktionsstörung der gestörte Umrichter vom funktionsfähigen Umrichter abtrennbar ist und der funktionsfähige Umrichter einem Umrichter aus einer der anderen Umrichtergruppen (I,II) mittels wenigstens eines Schalters (13,14) parallel schaltbar ist.

2. Einspeiseschaltung für eine Gleichstromlokomotive mit wenigstens vier Fahrmotorgruppen, bestehend aus jeweils mindestens einem Fahrmotor (5-8), wobei die Einspeiseschaltung folgende Merkmale aufweist:
a) jeder Fahrmotorgruppe (5-8) ist ein Umrichter (1-4) zugeordnet, der jeweils mindestens einen Eingangsstromrichter (24-27), einen Zwischenkreis (ZK1-ZK4) und mindestens einen motorseitigen Stromrichter (28-31) umfaßt,
b) jeweils ein erster und ein zweiter Umrichter (1,2 bzw. 3,4) sind zu einer Umrichtergruppe (I bzw. II) zusammengefaßt, wobei
b1) der erste Umrichter (1) einer ersten Umrichtergruppe (I) sowohl dem zweiten Umrichter (2) der ersten Umrichtergruppe (I) als auch dem zweiten Umrichter (4) einer zweiten Umrichtergruppe (II) zugeordnet ist und
b2) der erste Umrichter (3) einer zweiten Umrichtergruppe (II) sowohl dem zweiten Umrichter (4) der zweiten Umrichtergruppe (II) als auch dem zweiten Umrichter (2) der ersten Umrichtergruppe (I) zugeordnet ist , wobei
b3) jeweils der erste Umrichter (1 bzw. 3) mit seiner negativen Zwischenkreisschiene über jeweils eine erste Induktivität (15-18) am Eingangsstromrichter (25 bzw. 27) der zweiten Umrichter (2,4) beider Umrichtergruppen (I,II) angeschlossen ist und
b4) jeweils der zweite Umrichter (2 bzw. 4) mit seiner positiven Zwischenkreisschiene über jeweils eine zweite Induktivität (19-22) am Eingangsstromrichter (24 bzw. 26) der ersten Umrichter (1,3) beider Umrichtergruppen (I,II) angeschlossen ist und
b5) bei einer auftretenden Funktionsstörung der gestörte Umrichter von den funktionsfähigen Umrichtern abtrennbar ist.

3. Einspeiseschaltung nach Anspruch 1 oder 2,
**dadurch gekennzeichnet,**
daß die Eingangsstromrichter (24-27) als Gleichrichterbrücken und die motorseitigen Stromrichter (28-31) als Wechselrichter ausgebildet sind.

4. Einspeiseschaltung nach Anspruch 3,
**dadurch gekennzeichnet,**
daß die Gleichrichterbrücken steuerbar sind.

5. Einspeiseschaltung nach Anspruch 4,
**dadurch gekennzeichnet,**
daß den Dioden der Gleichrichterbrücken steuerbare Halbleiter-Elemente antiparallel geschaltet sind.

6. Einspeiseschaltung nach einem der Ansprüche 3 bis 5,
**dadurch gekennzeichnet,**
daß der Wechselrichter (28-31) als Pulswechselrichter ausgebildet ist und zu den steuerbaren Halbleiter-Elementen Dioden antiparallel geschaltet sind.

7. Einspeiseschaltung nach Anspruch 5 oder 6,
**dadurch gekennzeichnet,**
daß die steuerbaren Halbleiter-Elemente als GTO-Thyristoren oder Transistoren ausgebildet sind.
